# EUROPEAN PATENT APPLICATION

(11) **EP 2 613 416 A2**
(43) Date of publication of application: **10.07.2013**
(21) Application number: 13150267.6
(22) Date of filing: 04.01.2013
(51) Int. Cl.: H02J 3/38, H02J 7/00

(54) **Battery charging**

(30) Priority: 06.01.2012 GB 201200220
(71) Applicant: Poweroasis Ltd, Watchfield Swindon Wiltshire SN6 8TZ (GB)
(72) Inventor: Bishop, Peter William Dale, Swindon, Wiltshire SN5 4HF (GB); Johnson, Graham Ronald, Marlborough, Wiltshire SN8 1UA (GB)
(74) Representative: Coghlan, Judith Elizabeth Kensy

(57) **Abstract**

A method of controlling charging of a rechargeable battery to obtain a determined desired state of battery charge, a computer program product and charge control unit operable to perform that method. The method comprises:
assessing an indicator of state of battery charge to determine current battery charge; determining the desired state of battery charge at a predetermined point in an expected battery load pattern;
receiving an indication of an operational characteristic of an available charge source per time slot to charge the rechargeable battery until the predetermined point; calculating in which of the time slots to charge the battery in order to charge the rechargeable battery to the desired state of battery charge by the predetermined point in the expected battery load pattern to optimise a charging characteristic to the predetermined point.

Aspects aim to sallow a device to run continuously, subject to configured parameters, to optimise a configurable charging characteristic.

## Description

### FIELD OF THE INVENTION

The present invention relates to a method of controlling charging of a rechargeable battery to obtain a determined desired state of battery charge, and a device and computer program product operable to perform that method. The present invention is applicable to, but not limited to, the charging of rechargeable batteries for powering mobile telecommunication radio base stations.

### BACKGROUND

Wireless telecommunication systems are known. In a cellular system, radio coverage is provided to user equipment; for example, mobile telephones, in geographical areas known as cells. A base station is located in each cell to provide radio coverage. User equipment in each cell receives information and data from a base station and transmits information and data to the base station.

Examples of such cellular radio communication systems include Global System for Mobile Communications (GSM), Code Division Multiple Access (CDMA), Worldwide Interoperability for Microwave Access (WiMAX); Universal Mobile Telecommunications System (UMTS) and Long Term Evolution (LTE).

Such base stations and their associated equipment require electrical power to operate. Such power is typically provided by connection to an electrical grid or, in cases where such connection is unavailable, through connection to a stand-alone diesel generator whilst, recently, power generated from renewable means such as wind turbines or photovoltaic arrays has been used to provide an alternative or to supplement diesel and electrical grid connections.

Power supply solutions for mobile radio equipment must deliver required power to telecommunications equipment with a high availability, such that the radio telecommunication network remains operational. It will be understood that a load drawn by the equipment may be variable over the course of time. That is to say, the load on a base station may be dependent upon, for example, the volume of telecommunications traffic being carried.

The availability of power connection at remote sites may be variable. The cost of electrical power provided by connection to an electrical grid may be variable. In order to supply a reliable connection to a telecommunications network, base stations are often provided with rechargeable batteries which can assist in provision of radio telecommunication network coverage in the event of a power outage.

It is desired to provide an improved method of controlling the charging of such rechargeable batteries, whilst ensuring that operation of the base station may be continued and that parameters associated with providing a suitably charged rechargeable battery are optimized.

### SUMMARY

Accordingly, a first aspect provides a method of controlling charging of a rechargeable battery to obtain a determined desired state of battery charge comprising: assessing an indicator of state of battery charge to determine current battery charge; determining the desired state of battery charge at a predetermined point in an expected battery load pattern; receiving an indication of an operational characteristic of an available charge source per time slot to charge the rechargeable battery until the predetermined point; calculating in which of the time slots to charge the rechargeable battery in order to charge the rechargeable battery to the desired state of battery charge by the predetermined point in the expected battery load pattern to optimise a charging characteristic to the predetermined point.

The assessment may, of course, comprise making a calculation based, for example, on measurable system or device parameters indicative of state of battery charge.

The predetermined point in the expected battery load pattern may be at some selected point in the future. For example, the first aspect may seek, based on input variables, to optimise charging over, for example, a 24 hour period, a week, or over an upcoming configurable number of hours. Accordingly, the battery load pattern may be known or predicted over a similar scale of time period.

The first aspect recognises that by taking account of the current state of charge of a battery, an available charge power source characteristic and availability of grid or other power, in view of an expected load. calculations can be performed which take into account a need to maintain the availability of the operation of a device, for example, a base station, whilst ensuring that operational parameters associated with charging the battery are optimised. The parameters of the operation of the method may be configurable and can be selected to provide a device with battery charge power such that it may run continuously whilst optimising a selected charge characteristic. Accordingly, the method allows calculation of which of the time slots in which to charge the rechargeable battery to the desired state of battery charge by the predetermined time point in the future in the expected battery load pattern, that charging pattern being selected to incur an optimised charging characteristic to that predetermined point in time in the expected battery load pattern.

It will be appreciated that information about at least one operational characteristic of an available charge source may be available in various degrees of detail. For example, the operational characteristic may relate to the availability of grid power from one (or more) power distribution company, the operational characteristic may relate to expected loading being experienced across a power grid in a time slot, energy cost in that time slot, or the nature, for example, voltage, current, or frequency of an available charge power source. In some embodiments, an indication of at least one operational characteristic per time slot may be received and used in calculating in which of said time slots to charge said rechargeable battery in order to charge said rechargeable battery to said desired state of battery charge by said predetermined point in said expected battery load pattern to optimise the selected charging characteristic. In some embodiments a plurality of indicators of a plurality of operational characteristics may be used. For example, an indication the same characteristic may be received for a plurality of available charge sources and a calculation may be performed in relation to each available charge source before selection of a charge source for each time slot to optimise a selected charging characteristic.

Similarly, it will be appreciated that a charging characteristic to be optimised to the predetermined point may comprise one or more of a number of options. It may, for example, be desired to select charging time slots such that excessive loading to a grid is minimised, that is to say, charging may take place in time slots where it is determined that network or grid loading is light. In some embodiments, the characteristic to be optimised may be charging the battery as quickly as possible, or ensuring that it is always charged at a particular voltage, current or frequency.

It will be appreciated that the "time slots" are each of a duration less than the predetermined future point in the expected battery load pattern. Those time slots may, in some embodiments, comprise predetermined "tariff periods" as determined by an energy supplier. They may, for example, each comprise a fifteen minute, or less, time period, over which electricity wholesale companies provide future energy pricing information for several hours.

The first aspect can provide a method of performing energy arbitrage or optimisation of a selected charging characteristic in a dynamic manner.

In one embodiment, the method further comprises: assessing actual battery load by determining an indication of battery load; comparing the actual battery load to the expected battery load pattern; and correcting the determination of desired state of battery charge at the predetermined point accordingly. Accordingly, dynamic correction of a predicted loading pattern, of device or of battery, may be effected, thus ensuring accurate and dynamic efficient operation of the charging process. If less than a predicted load is being incurred, less charging may be required and vice versa.

In one embodiment, the method further comprises: determining a predetermined minimum allowable state of battery charge; and calculating in which of the time slots to charge the rechargeable battery to charge the rechargeable battery to the desired state of battery charge by the predetermined point in the expected battery load pattern to incur an optimised charging characteristic, for example, minimised charging cost, to the predetermined point; whilst ensuring the rechargeable battery does not fall below the predetermined minimum allowable state of battery charge. Accordingly, the method may allow for the maintenance of a predetermined, configurable "reserve" of battery power, thereby ensuring a device may operate for a period in the event of a power outage, during which no battery charging may be implemented.

In one embodiment, determining the predetermined minimum allowable state of battery charge comprises: calculating a battery discharge time based upon the expected battery load pattern and the determined current battery charge, and comparing the calculated battery discharge time to a predetermined threshold. The minimum allowable state of charge may be determined in a number of ways: it may, for example, simply be a number of hours of power supply when the battery is subjected to an average load, or may be determined more dynamically to account for predicted load over an upcoming time period, thereby ensuring hours of coverage are supportable even in the event that a device is heavily loaded.

In one embodiment, receiving an indication of an operational characteristic of an available charge source per time slot comprises periodically communicating with a time slot characteristic server to determine current indications an operational characteristic of an available charge source per time slot. Accordingly, the characteristic per time slot may be regularly updated to ensure that changes in the characteristic are reacted to in the charge cycle. That time period may be configurable, thus allowing the frequency with which the characteristic information is updated to be selected appropriately.

In one embodiment, the method further comprises: periodically repeating the assessing, determining, receiving and calculating to dynamically optimise a charging characteristic to said predetermined point. Accordingly, the charge cycle is maintained as relevant and efficient over a time period in the event of changes to the assessed, determined and calculated values.

In one embodiment, the expected battery load pattern is calculated based upon a device load history. In some embodiments, the load pattern is based upon a battery load history. That history may be continuously updated by a control unit.

In one embodiment, the received indication per time slot further comprises an indication of time slots in which power is unavailable. Thus the method allows for planning around organised power outages.

In one embodiment, the rechargeable battery comprises a telecommunications base station battery. The method has particular applicability to such batteries, since such sites are typically equipped with communication means which allow received indications of an operational characteristic of an available charge source to be kept up to date.

According to one embodiment, the method further comprises: monitoring for an indication that charging is to cease; and if an indication that charging is to cease is received, ceasing charging the rechargeable battery in any of the time slots.

According to one embodiment, monitoring for the indication that charging is to cease comprises monitoring measurable energy supply characteristics and assessing whether a predetermined energy supply characteristic threshold has been met. Accordingly, the method may, for example, comprise monitoring supply frequency.

Accordingly, the method may be operable to respond to a demand management input and stop charging as requested. Furthermore, it will be appreciated that once such a request to cease charging is rescinded, and it is required to charge a battery again, the method of the first aspect may be redeployed, and recalculation of a charging profile may be performed to the predetermined point in the battery load pattern. A demand management input requesting cessation of charging at a site may be effected in order to ensure available grid power, where power may be limited, is diverted to essential sites or devices.

According to one embodiment, the method further comprises: monitoring for a disaster warning indication; and if a disaster warning is received, charging the rechargeable battery in all upcoming time slots. Accordingly if, for example, a tsunami or hurricane warning is received, the method allows charging of a battery to maximise battery charge whilst power is still available, thereby operating to extend duration of device run-time once grid power becomes unavailable.

According to one embodiment, the method may further comprise: receiving an indication of a change to the expected load pattern and calculating in which time slots to charge the rechargeable battery in order to charge the battery to the desired state of charge by the predetermined point to optimise a charging characteristic to said predetermined point, given the change in expected load pattern. Accordingly, for example, a site may be warned of an upcoming event, for example a Formula 1 Grand Prix or concert which may cause a change to expected battery loading. Depending on the nature of the change to the load pattern, the device may be operable to charge the battery in all available time slots, or to maintain a greater than usual battery state of charge.

According to one embodiment, the method further comprises: assessing availability of alternative energy in each of the time slots; and calculating in which of the time slots to charge the rechargeable battery based on the indication of an operational characteristic of an available charge source per time slot from a primary energy source and the availability of alternative energy in each time slot.

According to one embodiment, the assessment of availability of alternative energy comprises: consulting a historical alternative energy supply pattern.

According to one embodiment, the assessment of availability of alternative energy comprises: receiving an indication of likely alternative energy availability until the predetermined point in the expected battery load pattern.

Accordingly, the method may take account of likely future availability of non-grid energy, for example, solar or wind generated power. In the event that it is determined that there is a high likelihood of alternative energy being available in a given time slot, battery charging in that time slot may occur from an alternative energy source rather than from grid power, thus minimising charging expense. Availability of alternative source energy may be assessed, for example based on historical data at a site or experienced by a device, or may be determined, for example, based on a received weather forecast. Furthermore, in the event that a device or site determines, based upon on-site real-time measurement of alternative energy source availability, that the predicted availability is not being met, a reversion to grid time slot charging may occur as appropriate.

In one embodiment, the method further comprises: forecasting in which of the time slots there is likely to be no available power to charge the rechargeable battery; and calculating in which of the time slots to charge the battery based on the forecast and the indication of an operational characteristic of an available charge source per time slot to charge the rechargeable battery, to optimise a charging characteristic to said predetermined point.
In one embodiment, the forecasting comprises assessing historical power outage data and predicting, based on that historical power outage data, in which of the time slots there is likely to be no available power to charge the rechargeable battery.

Accordingly, the method may be such that it is operable to learn a pattern of grid outages in an unreliable grid scenario and adapt charging control based upon a predicted, or forecast, grid outage. Such a method of forecast allows the charge method to take account of likely grid outages even if there are none explicitly planned or indicated by a power supplier.

A second aspect provides a computer program product operable, when executed on a computer, to perform the method of the first aspect.

A third aspect provides a battery charge control unit operable to control charging of a rechargeable battery to obtain a determined desired state of battery charge, the unit comprising: charge assessment logic operable to assess an indicator of state of battery charge to determine current battery charge; desired charge determination logic operable to determine the desired state of battery charge at a predetermined point in an expected battery load pattern; charge source characteristic reception logic operable to receive an indication of an operational characteristic of an available charge source per time slot to charge the rechargeable battery until the predetermined point; and charge calculation logic operable to calculate in which of the time slots to charge the rechargeable battery in order to charge the rechargeable battery to the desired state of battery charge by the predetermined point in the expected battery load pattern to optimise a charging characteristic to said predetermined point.

It will be appreciated that such a control unit may be housed within a device itself, or may be housed remotely from the device. In the case, for example, of a cellular base station site, the control unit may effectively be held at a central processing or management site. In such an arrangement, signalling from the remote base station may be required to determine a state of battery charge at that site. Historical loading pattern data may be held by a central processing site, and time slot charging information may be provided to the central processing site. All calculations may then occur at the central processing site, allowing the simple signalling of a "charge" or "do not charge" message to a remote base station site for each time slot. As a result, time slot pricing information may only need to be provided to a central processing site and the main processing and calculation may also occur at that site, thus simplifying hardware necessary at a remote base station location.

It will be appreciated that a remote control unit allows the method of the first aspect to be processed centrally for a plurality of sites or devices having a rechargeable battery. That plurality of sites or devices may be located in a predetermined geographical region, for example, a city, state, or country. According to some embodiments, only the calculated result of which time slots are appropriate for efficient charging may be communicated to each device. Such an arrangement allows a minimisation of data transfer to remote devices and sites and minimisation of computational complexity at each device or remote site. The messaging sent to a remote device or site may comprise an essentially binary indication of whether to charge or not charge, or may comprise an indication to the device or remote site of the relative "expense" or suitability of charging in a particular time slot. For example, a central processing unit may indicate to a device or remote site that time slots have been calculated to be cheap, medium, or expensive to charge, in the case that the indication relates to cost and the charge characteristic to be optimised is minimised expense, thereby allowing some further configurable optimisation of charging methods to be performed locally.

In one embodiment, the unit further comprises: load assessment logic operable to assessing actual battery load by determining an indication of battery load; and comparison logic operable to compare the actual battery load to the expected battery load pattern; and correction logic operable to correct the determination of desired state of battery charge at the predetermined point accordingly.

In one embodiment, the unit further comprises: minimum charge logic operable to determine a predetermined minimum allowable state of battery charge; and charge calculation logic operable to calculate in which of the time slots to charge the rechargeable battery to charge the rechargeable battery to the desired state of battery charge by the predetermined point in the expected battery load pattern to optimise a charging characteristic to said predetermined point.; whilst ensuring the rechargeable battery does not fall below the predetermined minimum allowable state of battery charge.

In one embodiment, the minimum charge logic is operable to determine the predetermined minimum allowable state of battery charge by calculating a battery discharge time based upon the expected battery load pattern and the determined current battery charge, and comparing the calculated battery discharge time to a predetermined threshold.

In one embodiment, charge source characteristic reception logic is operable to receive an indication of an operational characteristic of an available charge source per time slot by periodically communicating with a time slot characteristic server to determine current indications of operational characteristic per time slot.

In one embodiment, the unit further comprises: reassessment logic operable to periodically repeat the assessing, determining, receiving and calculating to dynamically optimise a charging characteristic to said predetermined point.
In one embodiment, the expected battery load pattern is calculated based upon a device load history.

In one embodiment, the received indication of an operational characteristic of an available charge source per time slot comprises an indication of time slots in which power is unavailable.

In one embodiment, the rechargeable battery comprises a telecommunications base station battery.

In one embodiment, the unit further comprises: monitoring logic operable to monitor for an indication that charging is to cease; and if an indication that charging is to cease is received, instructing charge cessation logic to operate to cease charging said rechargeable battery in any of the time slots.

In one embodiment, the monitoring logic is operable to monitor measurable energy supply characteristics and assess whether a predetermined energy supply characteristic threshold has been met.

In one embodiment, the unit further comprises: disaster warning logic operable to monitor for a disaster warning indication; and if said disaster warning is received, operable to instruct charging of the rechargeable battery in all upcoming time slots.

In one embodiment, the unit further comprises: alternative energy assessment logic operable to assess availability of alternative energy in each of the time slots; the calculation logic being operable to calculate in which of the time slots to charge the rechargeable battery based on the indication of an operational characteristic of an available charge source per time slot from a primary energy source and the availability of alternative energy in each the time slot.

In one embodiment, the alternative energy assessment logic is operable to assess availability of alternative energy by consulting a historical alternative energy supply pattern.

In one embodiment, the alternative energy assessment logic is operable to assess availability of alternative energy by receiving an indication of likely alternative energy availability until the predetermined point in the expected battery load pattern.

In one embodiment, the unit further comprises: forecast logic operable to forecast in which of the time slots there is likely to be no available power to charge the rechargeable battery; and the calculation logic is operable to calculate in which of the time slots to charge the battery based on the forecast and the indication of an operational characteristic of an available charge source per time slot to charge the rechargeable battery to optimise a charging characteristic to said predetermined point.

In one embodiment, the forecast logic is operable to assess historical power outage data and predict, based on that historical power outage data, in which of the time slots there is likely to be no available power to charge the rechargeable battery. Although aspects have been described in relation to a remote telecommunications base station, it will be appreciated that the method described may be utilised effectively to perform efficient charging of any device. For example, it may be possible to use the method described to charge a rechargeable battery for an electric vehicle, provided the future operational characteristics of an available charge source are available to the control unit managing the electric vehicle charge process.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described by way of example only with reference to the accompanying drawings, in which:
Figure 1 illustrates schematically components of a wireless communications base station according to one embodiment; and
Figure 2 illustrates schematically component inputs to a control unit according to one embodiment.

### DETAILED DESCRIPTION OF THE DRAWINGS

Typically, wireless telecommunications systems are provided in which the main components are provided in accordance with the principles set out below. User equipment roam through a wireless telecommunications system. Base stations are provided which support areas of radio coverage. A number of such base stations are typically provided and are distributed geographically in order to provide a wide area of coverage to user equipment. When user equipment is within an area served by a base station, communications may be established between user equipment and a base station over associated radio links. Each base station can support a number of sectors within a geographical area of service or cell.

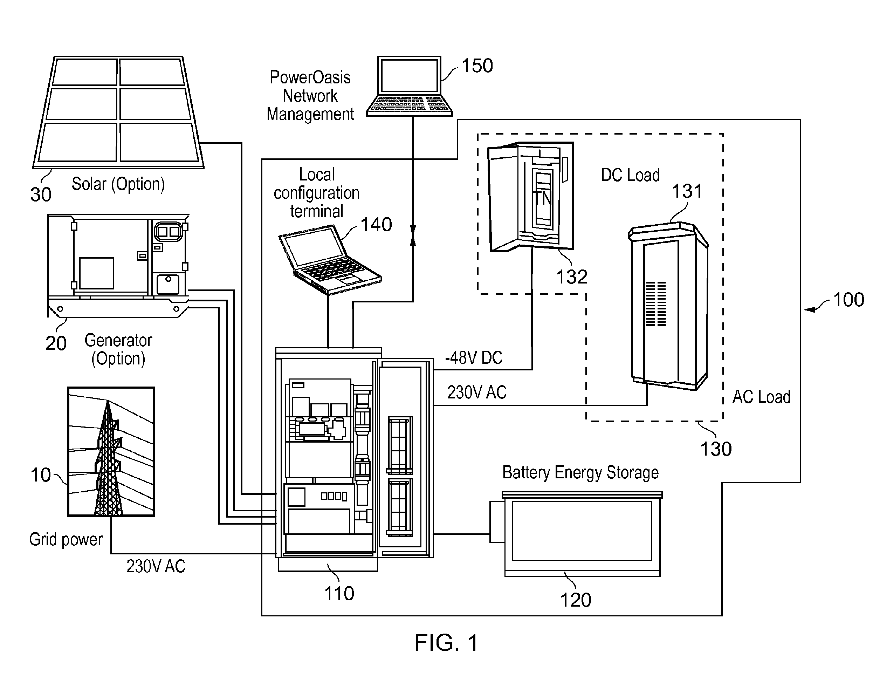

It will be appreciated that the base station illustrated schematically in Figure 1 illustrates one of a subset of a total number of base stations which may be present in a typical communications system.

The operation of the wireless communications system itself is typically managed by a Radio Network Controller (RNC). That RNC controls overall operation of a wireless telecommunications system by communicating with a plurality of base stations over a communications link.

Such base stations and their associated equipment require electrical power to operate. Such power is typically provided by connection to an electrical grid or, in cases where such connection is unavailable, through connection to a stand-alone diesel generator whilst, recently, power generated from renewable means such as wind turbines or photovoltaic arrays has been used to provide an alternative or to supplement diesel and electrical grid connections.

Power supply solutions for mobile radio equipment must deliver required power to telecommunications equipment with a high availability, such that the radio telecommunication network remains operational. It will be understood that a load drawn by the equipment may be variable over the course of time. That is to say, the load on a base station may be dependent upon, for example, the volume of telecommunications traffic being carried.

The availability of power connection at remote sites may be variable. The operational characteristics of available charge sources, for example, of electrical power provided by connection to an electrical grid may be variable. In order to supply a reliable connection to a telecommunications network, base stations are often provided with rechargeable batteries which can assist in provision of radio telecommunication network coverage in the event of a power outage.

Aspects provide an improved method of controlling the charging of such rechargeable batteries, whilst ensuring that operation of the base station may be continued and that the charging process characteristics associated with providing a suitably charged rechargeable battery are optimized. Aspects aim to provide continuous base station operation, subject to site specific configurable parameters, to provide an optimised battery charge solution.

Figure 1 illustrates schematically the main components of a wireless communications base station according to one embodiment. The base station 100 comprises generally a control unit 110. That control unit is operable to control, amongst other things, the operation of a rechargeable battery 120 to control the operation of power distribution to base station loads 130 which themselves may comprise an AC load 131 and a DC load 132, so that equipment required for communication with user equipment may be effectively supported.

Control unit 110 is also operable to communicate with a local configuration terminal 140 which is operable to provide a local commissioning agent with an opportunity to provide site specific information in relation to configuration of base station 100.

Control unit 110 may also be operable to communicate with an offsite management unit 150. That communication link may be supported by a wireless communications link or may be fully wired over a backhaul system.

Base station 100 and control unit 110 may also be provided with links to grid power 10 and, according to the particular embodiment shown in Figure 1, to a diesel generator 20 and photovoltaic cells 30. It will be appreciated that base station 100 may, in alternative embodiments, be connectible to further power sources; for example, a wind turbine or other similar devices.

Embodiments described herein provide a method for controlling charging of rechargeable battery 120. The methods described aim to control the charging of the battery to obtain a determined desired state of battery charge. According to one embodiment, the method comprises the steps of assessing an indicator of state of battery charge to determine current battery charge.

It will be appreciated that, generally, charging equipment supplies current to the rechargeable battery 120. That charging process will typically be operated by a charge management controller housed within the control unit 110, and manages the charging of battery 120 by providing necessary current and voltage rate regulation. Various means of determining an instantaneous state of battery charge are possible. According to embodiments, it is necessary to obtain some indication of the current state of battery charge so that an assessment can be made of the level of charging which may be required in order to ensure continued operation of base station 100.

Control unit 110 is also operable, according to embodiments, to determine a desired state of battery charge at a predetermined point in an expected battery load pattern. It is likely that a base station 100 will support user equipment communications according to a relatively stable pattern over a particular time period. It will be appreciated that the load pattern may be determined in relation to user traffic patterns over, for example, a 24 hour or 7 day cycle. That expected battery load pattern may be determined by accumulating historical operational data. The historical operational data may be constantly updated in a dynamic manner, based upon continued base station operation. Alternatively, the expected battery load pattern may be provided to base station 100 by local configuration terminal 140 or by an offsite management unit 150.

It will be appreciated that in order to provide sufficient power to a base station at a particular point in an expected load pattern, that load pattern being site-specific, some charging of the battery may be necessary, depending upon the assessed current battery charge.

Control unit 110 is operable, according to one embodiment, to receive an indication of cost per time slot to charge the rechargeable battery until the predetermined point in the expected battery load pattern. That is to say, the control unit 110 may be operable to receive future forward pricing of electricity from the grid 10. It will be appreciated that the cost of extracting power from the grid may be dependent upon time of day, power availability and other similar factors. Often, power suppliers can provide an indication into the future of the cost of grid power. That costing may be provided on a time slot basis. The time slots may, for example, be slots of several hours, or may be slots of 15 minutes.

Control unit 110 is operable, according to one embodiment, to take account of the current state of charge of a battery, the cost and availability of grid or other power, and an expected load for the base station 100, and perform calculations which take into account a need to maintain the availability of the operation of base station 100 whilst ensuring that operational expenditure associated with charging the battery 120 is optimised. The parameters of the operation of the control unit 110 may be set to provide a base station with battery charge power such that it may run continuously at a lowest possible determined cost. Accordingly, such an embodiment is provided such that control unit 110 is operable to calculate in which of the time slots to charge the rechargeable battery to the desired state of battery charge by the predetermined time point in the future in the expected battery load pattern, that charging pattern being selected to incur a minimised charging cost to the predetermined point in the expected battery load pattern.

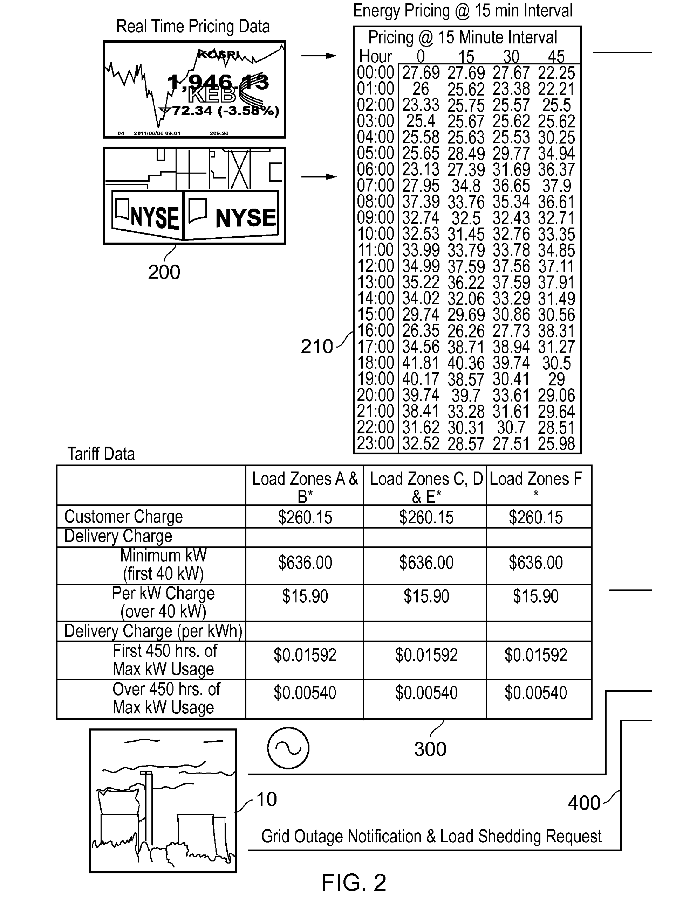

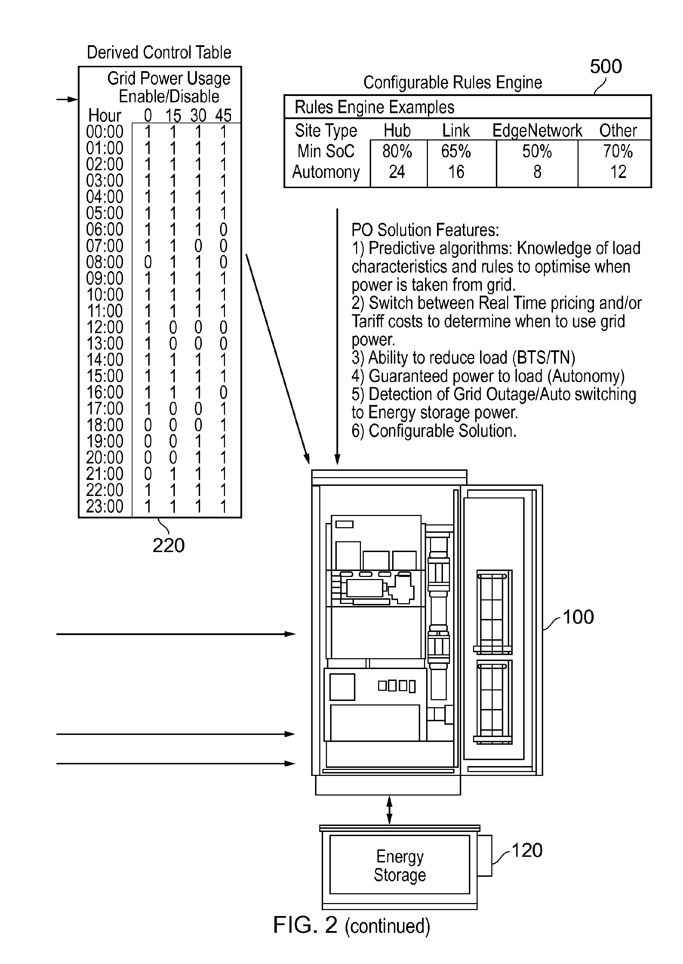

Figure 2 illustrates schematically component inputs to a control unit, such as control unit 110, in accordance with one embodiment. In order to implement the most efficient charging of rechargeable battery 120 to ensure efficient operation of base station 100, control unit 110 may be operable to receive various inputs. In addition to being operable to make an assessment of the state of charge of battery 120, and in addition to base station load information available internally to control unit 110, the operation of the charging method in accordance with embodiments described herein may be configured by an end user on commissioning of base station 100. That commissioning will typically occur by providing local configuration terminal 140 with appropriate configuration parameters. Those parameters may, for example, include an indication for the specific site of the back-up power, in hours, required at that particular location in the event of a complete power outage. The configurable rules may be set in a table such as that shown in Figure 2 as Table 500, and may include various parameters. Predictive algorithms may be provided which have knowledge of load characteristics and have rules to optimize when power is extracted from a grid. The table may include information which allows the control unit 110 to switch between real time energy pricing data or tariff costs to determine when to use grid power and when to operate from a battery. The configurable rules may be configured to account for a base station which is operable to reduce its load and may, for example, be operable to provide some means to detect grid outage or to instruct automatic switching to stored power.

In some embodiments, control unit 110 is operable to receive real time pricing data 200 from a grid supplier. That real time pricing data may be consistently updated over a communications link provided by the base station itself or via a link with an offsite management unit 150. The energy pricing may be provided in accordance with 15 minute interval time slots, as shown for illustrative purposes in Table 210. That pricing table may also be provided directly to control unit 110 via a communications link supported by the base station 100, or may be provided to an offsite management unit 150.

It will be appreciated that in some embodiments the cost of power may be provided in accordance with a tariff data table, shown as Table 300 in Figure 2. Those tariffs may depend upon zones or particular energy usage.

Furthermore, control unit 110 may be provided with information relating to planned grid outage notifications and planned load shedding requests illustrated schematically as 400 in Figure 2.

The information from various possible inputs may be used by control unit 110 or by an offsite management unit 150, in conjunction with rules provided by a configurable rules engine 500 in relation to a specific site, to produce a control table 220. That control table includes an indication of whether in any particular time slot it is efficient for control unit 110 to instruct charging of battery 120. As shown schematically in Table 220, it can be seen that the rules implemented in that particular embodiment are such that continuous charging occurs between midnight and 6.45 in the morning. At 6.45 am, the control unit instructs operation of the base station such that the battery 120 is not charged until 7.00 in the morning. At 7.00 am, charging recommences until 7.30 am. It will be appreciated that the derived control table and particular charging slots are likely to be highly dependent upon the site specific commissioning.

Embodiments allow the operation of a base station to be reactive rather than predictive. It will be appreciated that since the battery is provided within a telecommunications grid site, the base station and control unit themselves are such that pricing data can be queried in real time, thereby providing a most efficient means of operating the base station site. The ability to centrally process or locally process such real time information may also offer operational advantages.

Embodiments allow base stations to run continuously at, for example, a low cost. In particular, a base station control unit may be programmed such that it knows at any given point in a load pattern it needs to be able to deal with an unexpected power outage and may therefore be configured such that an appropriate level of backup power is available at all points.

Embodiments allow for a base station to be operable to perform, for example, energy arbitrage, thereby allowing autonomous efficient operation of a base station based on inputs including the cost of electricity, load information and the availability of energy storage on site.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling charging of a rechargeable battery to obtain a determined desired state of battery charge comprising:
assessing an indicator of state of battery charge to determine current battery charge;
determining said desired state of battery charge at a predetermined point in an expected battery load pattern;
receiving an indication of an operational characteristic of an available charge source per time slot to charge said rechargeable battery until said predetermined point;
calculating in which of said time slots to charge said rechargeable battery in order to charge said rechargeable battery to said desired state of battery charge by said predetermined point in said expected battery load pattern to optimise a charging characteristic to said predetermined point.

2. A method according to claim 1, further comprising:
assessing actual battery load by determining an indication of battery load; comparing said actual battery load to said expected battery load pattern; and correcting said determination of desired state of battery charge at said predetermined point accordingly.

3. A method according to claim 1 or claim 2, further comprising determining a predetermined minimum allowable state of battery charge; and
calculating in which of said time slots to charge said rechargeable battery to charge said rechargeable battery to said desired state of battery charge by said predetermined point in said expected battery load pattern to optimise a charging characteristic to said predetermined point; whilst ensuring said rechargeable battery does not fall below said predetermined minimum allowable state of battery charge.

4. A method according to claim 3, wherein determining said predetermined minimum allowable state of battery charge comprises: calculating a battery discharge time based upon said expected battery load pattern and said determined current battery charge, and comparing said calculated battery discharge time to a predetermined threshold.

5. A method according to any preceding claim, wherein receiving an indication of an operational characteristic of an available charge source per time slot comprises periodically communicating with an operational characteristic server to determine current indication of an operational characteristic of an available charge source per time slot.

6. A method according to any preceding claim, further comprising periodically repeating said assessing, determining, receiving and calculating to dynamically optimise a charging characteristic to said predetermined point..

7. A method according to any preceding claim, wherein said received indication of an operational characteristic of an available charge source comprises an indication of time slots in which power is unavailable.

8. A method according to any preceding claim, further comprising:
monitoring for an indication that charging is to cease; and if said indication that charging is to cease is received,
ceasing charging said rechargeable battery in any of said time slots.

9. A method according to claim 8, wherein monitoring for said indication that charging is to cease comprises monitoring measurable energy supply characteristics and assessing whether a predetermined energy supply characteristic threshold has been met.

10. A method according to any one of claims 1 to 7, further comprising:
monitoring for a disaster warning indication; and if said disaster warning is received,
charging said rechargeable battery in all upcoming time slots.

11. A method according to any preceding claim, further comprising:
assessing availability of alternative energy in each of said time slots; and
calculating in which of said time slots to charge said rechargeable battery based on said indication an operational characteristic of an available charge source from a primary energy source and said availability of alternative energy in each said time slot.

12. A method according to claim 11, wherein said assessment of availability of alternative energy comprises: receiving an indication of likely alternative energy availability until said predetermined point in said expected battery load pattern.

13. A method according to any preceding claim, further comprising:
forecasting in which of said time slots there is likely to be no available power to charge said rechargeable battery; and
calculating in which of said time slots to charge said battery based on said forecast and said indication an operational characteristic of an available charge source per time slot to charge said rechargeable battery to optimise a charging characteristic to said predetermined point.

14. A computer program product operable, when executed on a computer, to perform the method of any one of claims 1 to 13.

15. A battery charge control unit operable to control charging of a rechargeable battery to obtain a determined desired state of battery charge comprising:
charge assessment logic operable to assess an indicator of state of battery charge to determine current battery charge;
desired charge determination logic operable to determine said desired state of battery charge at a predetermined point in an expected battery load pattern;
charge source characteristic reception logic operable to receive an indication of an operational characteristic of an available charge source per time slot to charge said rechargeable battery until said predetermined point;
charge calculation logic operable to calculate in which of said time slots to charge said rechargeable battery in order to charge said rechargeable battery to said desired state of battery charge by said predetermined point in said expected battery load pattern to optimise a charging characteristic to said predetermined point..
